Europäisches Patentamt

European Patent Office

Office européen des brevets

(11) Publication number : **0 482 815 A2**

# (12) EUROPEAN PATENT APPLICATION

(21) Application number : **91309474.4**

(22) Date of filing : **15.10.91**

(51) Int. Cl.⁵ : **G06F 9/46**

(30) Priority : **23.10.90 US 602435**

(43) Date of publication of application :
**29.04.92 Bulletin 92/18**

(84) Designated Contracting States :
**DE ES FR GB IT SE**

(71) Applicant : **AMERICAN TELEPHONE AND TELEGRAPH COMPANY**
**550 Madison Avenue**
**New York, NY 10022 (US)**

(72) Inventor : **Kanakia, Hemant R.**
**37 Penwood Drive**
**New Providence, New Jersey 07974 (US)**

(74) Representative : **Buckley, Christopher Simon Thirsk et al**
**AT&T (UK) LTD. 5 Mornington Road**
**Woodford Green, Essex IG8 OTU (GB)**

(54) **Rate-based scheduling of multiplexed resources.**

(57)    The invention comprises method and apparatus for time-multiplexing a resource (MR) among entities which require access to the resource at a rate which is controlled over both an averaging interval and a jitter averaging interval which is shorter than the averaging interval. The technique employs a set of frame queues (117) of work descriptors (103) representing the work to be done by the resource for the entities. Each frame queue is associated with a frame of rime slots in which the resource performs work. A resource server (121) provides work descriptors from the head of a given frame queue for the frame associated with the frame queue and then serves the next frame queue for its frame. A queue manager (107) places work descriptors received from the entities at the tails of the frame queues. The work descriptors from a given one of the entities are placed in the frame queues in such fashion that when the resource server takes work descriptors from the heads of the frame queues, it automatically provides the work descriptors for a given entity to the resource at the required controlled rate. The resource server may serve one or more best effort queues (115) in addition to the frame queues. The work descriptors (103) in the best effort queues represent work for entities which do not required a controlled rate of access. The resource server serves a best effort queue when a frame queue is empty but there are time slots remaining in its frame.

FIG. 1

## Background of the Invention

### Field of the Invention

The invention relates generally to the scheduling of multiplexed resources such as central processors or digital data transmission systems and more particularly to scheduling such resources in such fashion that the resource performs work for a given entity at a controlled rate.

### Description of the Prior Art

With any multiplexed resource, scheduling the resource is a problem. Goals of scheduling include maximizing the use of the resource, providing the greatest access to the resource to those entities which need it most, and ensuring that all of the entities using the resource have at least some access to it.

As multiplexed resources such as central processors and data transmission lines have grown in speed and capacity, the entities using the resources have come to include some which have real time requirements, i.e., they must have access to the resource at a steady rate. An example of such an entity with real time requirements is a virtual circuit which is supplying digitized video data to a television receiver. The television receiver has a fixed rate at which it consumes the digitized video data; if the data fails to arrive at that rate, the picture stops moving or fails entirely; if it arrives faster than the fixed rate, the television receiver must store it in a buffer, and if the rate of arrival remains higher than the rate of consumption for any length of time, the buffer will overflow and the data will be discarded.

While prior-art schedulers have done reasonably well at scheduling multiplexed resources among entities which do not have real time requirements, they have not done so well with entities which do have such requirements. The reason for this is that in prior-art schedulers, the rate at which the multiplexed resource does work for a given entity is a function of the number, and in many cases, the priorities of the other entities using the resource. If a given entity has a low priority, but no high priority entity is presently using the system, the low priority entity will be given a high rate of access to the resource; if, on the other hand, one or more high priority entities is using the system, the low priority entity will be given a low rate of access to the system. Further, as may be seen from the foregoing, an entity's rate of access to the system is subject to change over time, as the mix of entities using the system changes.

As the example of the virtual circuit providing digitized video data shows, entities with real time requirements need *rate controlled* access to the multiplexed resource. There are two aspects to such rate controlled access: first, the entity with real-time requirements must have a relatively constant amount of access to the resource over a set interval of time. This interval of time is known as the *averaging interval*. Second, the constant amount of access must be provided relatively evenly throughout the averaging interval. If, for example, the virtual circuit receives all its access to the transmitter at the beginning of the averaging interval and none at the end, the television receiver's buffer will overflow and part of the video data will be lost. Failure of an entity with real time requirements to have even access to a multiplexed resource throughout the averaging interval produces the phenomenon termed herein *jitter*. The degree of evenness which an entity with real time requirements needs is expressed by the amount of access to the resource over a second interval of time which is shorter than the averaging interval. This second interval is known as the *jitter averaging interval*. In terms of the television set example, the amount of access in the jitter averaging interval must be such that if the entity receives that amount of access for each of the jitter averaging intervals, the television receiver's buffer will not overflow during the averaging interval.

As is apparent from the foregoing, what is needed in order to multiplex a resource among entities with real time requirements is a technique which will give the entities access to the resource such that a given entity receives the amount of access it requires both during its averaging interval and during its jitter averaging interval. Such a technique is provided by the present invention.

### Summary of the Invention

In one aspect, the invention is apparatus for time multiplexing a resource among pieces of work provided by one or more entities. The resource operates on the pieces of work during intervals of time. The apparatus includes one or more sets of work descriptors describing the pieces of work; a server for providing any work descriptors in the sets of work descriptors to the resource, the work descriptors being provided in an ordered fashion for a set of the intervals of time; and a work descriptor set manager for receiving the provided work descriptors and placing the work descriptors for pieces of work provided by a given one of the entities in the sets thereof such that the ordered provision of the work descriptors by the server causes the resource to do the pieces of work provided by the given one of the entities at a controlled rate.

In another aspect of the invention, the sets of work descriptors are queues thereof.

In a further aspect, there is a best effort queue for entities which do not require controlled rates of access. Intervals of time for which there is no piece of work in the queue presently being served are used for work from the best effort queue.

In an additional aspect, the rate at which an entity receives access is controlled by parameters which limit the density of work descriptors in the sets thereof.

In a still further aspect, the entities are connections between devices connected to a high-speed network and the network is the multiplexed resource.

These and other aspects, objects, and advantages of the invention will be perceived by one of ordinary skill in the art to which the invention pertains after consideration of the following Detailed Description and Drawing, wherein:

## Brief Description of the Drawing

FIG. 1 is a schematic overview of the invention;
FIG. 2 is a diagram of the values used to control assignment of a piece of work to a queue;
FIG. 3 is a diagram of the values used to control provision of a piece of work to the resource;
FIG. 4 is a diagram of data structures used in a preferred embodiment;
FIG. 5 is a further diagram of data structures used in a preferred embodiment; and
FIG. 6 is a flow chart of operation of a preferred embodiment.

Reference numbers used in the figures and the Detailed Description have two parts: digits other than the two least-significant digits refer to the number of the figure in which the item identified by the reference number first appears; the two least-signifcant digits identify the reference in the figure in which it first appears.

## Detailed Description

The following Detailed Description will first provide an overview of the technique for providing access to the resource at a controlled rate and will then disclose a preferred embodiment intended for use with a fast packet network.

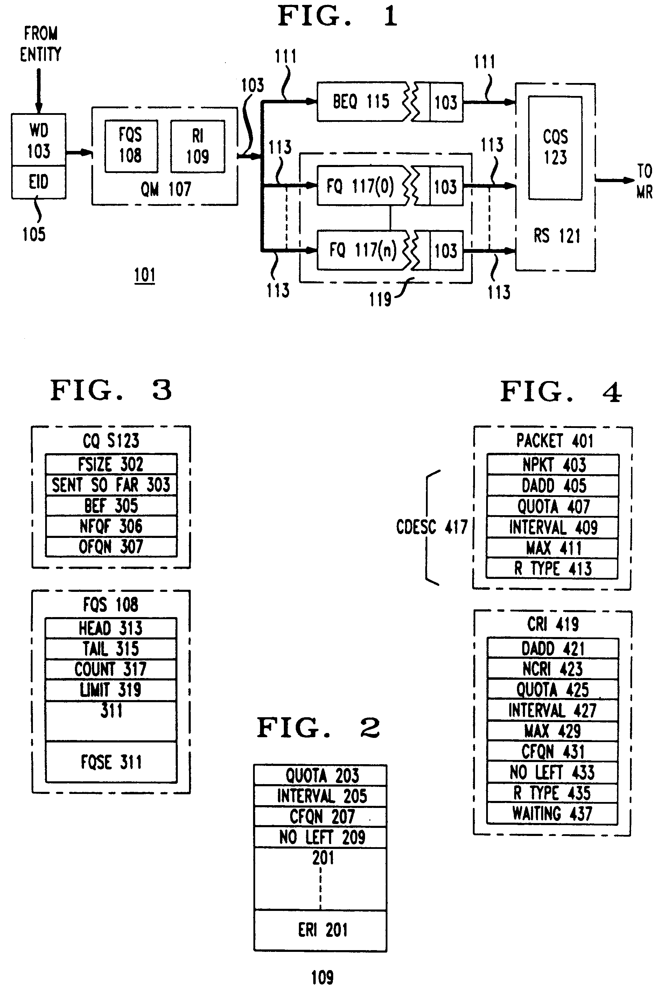

## Overview of the Technique: FIGS. 1-3

FIG. 1 presents an overview of apparatus 101 for providing pieces of work received from one or more entities to a multiplexed resource at a controlled rate. Each piece of work is represented by a work descriptor 103 which describes the work to be done; in some cases, work descriptor 103 may itself contain the work to be done. Each work descriptor 103 contains entity identifier (EID) 105, which identifies the entity for which the work is to be done. Examples of entities include virtual circuits, connections between devices connected to a LAN, or processes executing on a processor. Each work descriptor 103 is received by queue manager 107, which places work descriptor 103 at the tail of one of queues 115 and 117 (0..n). Work descriptors 103 are taken from the heads of the queues by resource server 101, which provides them to the multiplexed resource.

At a given moment, a given entity may have best effort access to the multiplexed resource or access at a controlled rate. In the first case, queue manager 107 places work descriptors 103 for the entity in best effort queue 115, as shown by arrow 111; in the second case, queue manager 107 places each work descriptor 103 in one of the frame queues 117(0..n), as shown by arrow 113. Each frame queue 117 corresponds to a *frame* of *slots*. Each slot represents one *slot time*, i.e., the interval of time required by the multiplexed resource to complete the piece of work represented by one work descriptor 103. The number of slots in the frame multiplied by the interval of time represented by a slot is the *frame time* for frame queue 117. Resource server 121 provides pieces of work from a given frame queue 117 to the multiplexed resource for the frame queue 117's frame time and then goes onto the next frame queue 117 and does the same for that frame queue 117's frame time.

If there are not enough work descriptors 103 in a given frame queue 117 to require the entire frame time for the frame queue 117, resource server 121 provides work descriptors 103 from best effort queue 115 until the frame time for frame queue 117 is over; if both best effort queue 115 and the given frame queue 117 are empty, resource server 121 provides no work descriptors 103 to the multiplexed resource and the multiplexed resource idles for the remainder of frame queue 117's frame time.

As may be seen from the foregoing discussion, queue manager 107 can determine from the manner in which it places work descriptors 103 for an entity in frame queues 119 the rate at which resource server 121 provides pieces of work belonging to the entity to the multiplexed resource. Moreover, queue manager 107 can place work descriptors 103 in frame queues 119 in such fashion that it can not only guarantee the maximum amount of work done for an entity in an averaging interval, but can also guarantee the maximum amount of work done for the entity in a jitter averaging interval. Apparatus 101 is thus capable of providing rate controlled access to the multiplexed resource.

The averaging interval AI in apparatus 101 is the following:

$$AI = FT * FN$$

where FT is the frame time for a single frame and FN is the number of frames. FN is of course identical with the number of frame queues 117 in apparatus 101. It will be convenient for the following discussion to further define a *superframe (SF)*, which is made up of all of the slots in the frames represented by frame queues 119. The number of such slots is the *superframe size (SFS)*. It is the product of the *frame size (FS)*, the number of slots in a frame, and FN. The maximum amount of time which the resource spends serving a given entity during the averaging interval is

$$ES * FT$$

where ES is the maximum number of slots which queue manager 107 is permitted to allocate to a given entity during one supeframe. Further, the value

$$ES / SFS$$

specifies the percentage of the total *bandwidth* of the multiplexed resource which is available to the given entity.

As will be explained in more detail below, queue manager 107 prevents jitter by controlling the density of work descriptors 103 in frame queues 119 for a given entity. In a preferred embodiment, queue manager 107 controls the density by limiting the number of work descriptors 103 which a given entity may have in a given frame queue 117 and defining an interval between frame queues 117 which may contain work descriptors 103 for the given entity. The period between the time when resource server 121 begins taking work descriptors 103 for a given entity from one frame queue 117 containing work descriptors for the entity and the time when resource server 121 begins taking work descriptors 103 from the next frame queue 117 containing work descriptors 103 for the entity is the jitter averaging interval for that entity. It is expressed as follows:

$$JAI = (FN * FT) / (I + 1)$$

where I is the number of frames skipped. The maximum amount of work done in the jitter averaging interval is MFS, the maximum number of slots which queue manager 107 may allocate for the entity in a frame. In terms of MFS, ES over AI is

$$MFS * (FN / (I + 1))$$

## Placing Work Descriptors 103 in Frame Queues 119: FIGs. 2-3

The data structure employed by queue manager 107 to control the density of work descriptors 103 for controlled rate entities in frame queues 119 appears in FIG. 1 as rate information (RI) 109. FIG. 2 shows rate information 109 in more detail. Rate information 109 contains an entry 201 containing entity rate information (ERI) for each entity which has rate-controlled access to the multiplexed resource. Each entry 201 contains four pieces of information: Quota 203: the maximum number of work descriptors 105 which a given entity may have in a frame queue 117; Interval 205: the number of frame queues 117 to be skipped after the number of work descriptors 105 permitted by quota 203 have been added to a given frame queue 117; Current frame queue number (CFQN) 207: the number of the frame queue 117 to which work descriptors for the entity are presently being added; and Number left (NO LEFT) 209: the number of work descriptors 103 which may still be inserted into the frame queue 117 specified by CFQN 207.

Frame queues 119 are implemented by means of another data structure in queue manager 107, frame queue status 108. FIG. 3 shows frame queue status 108 in more detail. Each frame queue 117 has a frame queue status entry 311 in frame queue status 108. Each entry 311 is identified by the number of its corresponding frame queue 117 and contains the following information for its frame queue 117: Head 313: a pointer to the first work descriptor 103 in the corresponding frame queue 117; Tail 315: a pointer to the last work descriptor 103 in the corresponding frame queue 117; count 317: the number of work descriptors 103 currently in the corresponding frame queue 117; limit 319: the maximum number of work descriptors 103 which may be in the corresponding frame queue 117.

The limit parameter ensures that not all of the frame corresponding to frame queue 117 will be required for work descriptors 103 for controlled-rate entities, and that part of the frame will therefore be available for work descriptors 103 from best effort queue 115.

The algorithm which queue manager 107 uses to place work descriptors 103 belonging to controlled-rate entities in frame queues 117 is the following loop, which continues as long as work descriptors 103 are available to be placed in queues 119 and 115 and there is room in the queues 119 and 115. For a given work descriptor 103, If NO LEFT 209 indicates that no more work descriptors 103 for the entity represented by ERI 201 may be placed in frame queue 117 specified by CFQN 207, then locate the next frame queue 117 which may receive work descriptors 103 for the entity and prepare for the receipt of the work descriptor by: adding INTERVAL 205 to current frame queue number 207; If the result is greater than the largest number for a frame queue 117, wrap around; set NO LEFT 209 from QUOTA 203; add work descriptor 103 to the tail of frame queue 117 specified by current frame queue number 207 and update tail pointer 315 in frame queue status entry 311 for that frame queue 117 to point to it; decrement NO LEFT 209; and increment count 317 in that frame queue status entry 311.

## Providing Work Descriptors 103 to the Multiplexed Resource

Resource server 121 operates under control of current queue status information 123. This information is shown in detail in FIG. 3. There are five items of information: FSIZE 302: this value specifies the number of slots in the frames represented by FQs 117; sent so far: this value specifies the number of work descriptors 103 sent in the frame time represented by the current frame queue 117; Best Effort Flag (BEF) 305: This indicates when resource server 101 is to take work descriptors 103 from best effort queue 115 instead of from the current frame queue 117; Next Frame Queue Flag (NFQF) 306: This indicates when resource server 121 is to take work descriptors 103 from the next frame queue 117; and Output frame queue number 307: this is the number of frame queue 117 for the frame currently being served by resource server 121.

The algorithm employed by resource server 121 in outputting work descriptors from queues 119 and 115 is an endless loop with the following steps: If there is a work descriptor 103 in frame queue 117 specified by OFQN 307 and sentsofar 303 is less than FSIZE 302, do: remove work descriptor 103 at the head of frame queue 117 from the head of the queue; decrement count 317 in frame queue status 108; provide work descriptor 103 to the multiplexed resource; increment sent so far, If there is no work descriptor 103 in frame queue 117 specified by OFQN 307 and best effort flag 305 is not set, then if sent so far 303 is less than frame size 302, set best effort flag 305; else set next frame queue flag 306; If best effort flag 305 is set and there is a work descriptor 103 at the head of best effort queue 115, then do: provide the work descriptor 103 to the multiplexed resource; increment sent so far 303; if sent so far 303 is equal to or exceeds frame size 302, set next frame queue flag 306. if best effort flag 305 is set and there are no more work descriptors 103 in best effort queue 115, set next frame queue flag 306 and wait the amount of time required to provide enough work descriptors such that sent so far 303 equals frame size 302; and if next frame queue flag 306 is set then do: increment output frame queue number 307, wrapping around if necessary; reset best effort flag 305; reset next frame queue flag 306; and reset sent so far 303 to 0. A particular advantage of apparatus 101 is that as long as the values of QUOTA 203 for the entities placing work descriptors 103 in a given frame queue 117 are together less than the number of packets specified by FSIZE 302, the rate of one entity may be changed without affecting the rates of any other entities.

## Implementation Details of a Preferred Embodiment: FIGs. 4-6

The preferred embodiment described in this section was implemented as a prototype to test the operating characteristics of apparatus 101 when used to provide data packets to a high-speed broad-band LAN. The prototype was implemented by means of a program written in the well-known "C" programming language which was compiled and executed on a 25-MHz MC68020 microprocessor produced by Motorola, Inc. The implementation was cabable of providing 200,000 packets/sec to the LAN. FIG. 4 shows the data structures used for data packets and for controlled rate information 419 in a preferred embodiment. Data packets 401 correspond of course to work descriptors 103. The fields of packets 401 contain the following information: Next packet (NPKT) 403 is a pointer to a next packet 401 in a linked list thereof; Destination address (DADD) 405 idenfies the destination to which packet 401 is being sent; it also serves as entity identifier 105 in a preferred embodiment; QUOTA 407 specifies the number of packets 401 having DADD 405 which may be placed in a given frame queue 117; INTERVAL 409 is the interval between frame queues 117 which may have packets 401 with DADD 405; MAX 411 is the maximum number of packets 401 which may be enqueued on frame queues 119; and Rate type (RTYPE) 413 indicates whether packets for DADD 405 are to receive rate-controlled or best effort service. Taken together, fields 407 through 413 make up connection description (CDESC) 417, which describes the kind of service that the connection between the device sending packets 401 and the device specified by DADD 405 is to have. Of course, if RTYPE 413 specifies best effort service, fields 407 through 411 are meaningless. In a practical embodiment, packet 401 would also either contain data or a pointer to data.

Connection rate information 419 corresponds in a preferred embodiment to entity rate information 201. There is a CRI 419 for every connection for which server 121 is currently placing packets 401 on the packet network. Except for the fields NCRI 423 and WAITING 437, the fields in connection rate information correspond in function to the fields with the same names in ERI 201 and packet 401. NCRI (next CRI) 423 is a pointer to the next connection rate information structure 419 in a linked list thereof; WAITING 437 indicates the number of packets 401 with DADD 405 currently enqueued on frame queues 119.

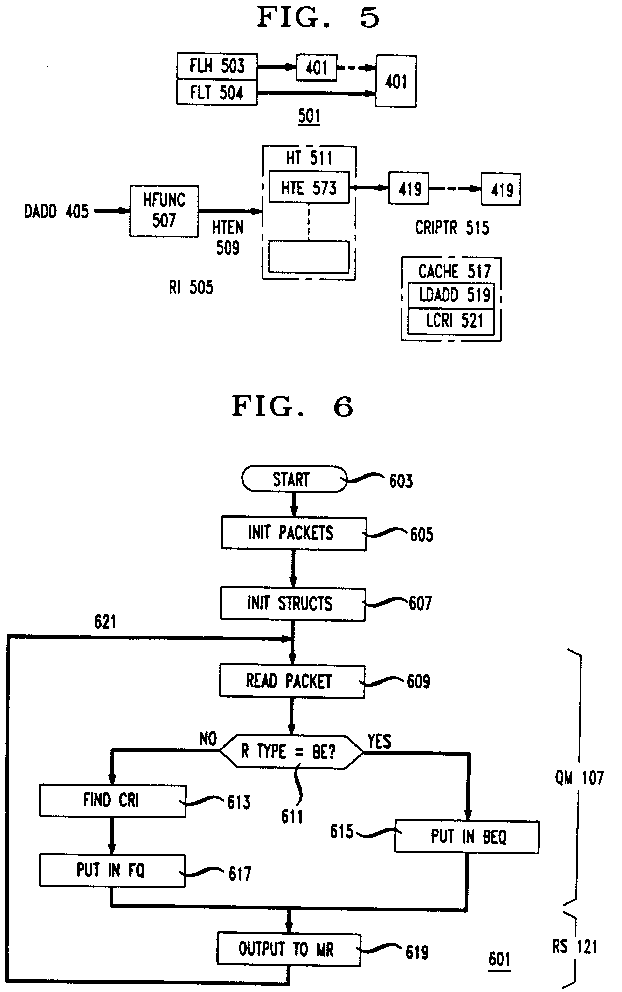

The remaining data structures employed in the preferred embodiment are shown in FIG. 5. In the prototype, a stream of packets 401 to be sent is simulated by means of free packet queue 501, which is a linked list of packets 401 with free list head 503 pointing to the first packet 401 in the queue and free list tail 504 pointing to the last packet 401 in the queue.

The prototype further implements rate information 109 as shown under reference number 505. Rate information 505 takes DADD 405 from a packet 401 and uses it to obtain a pointer, CRIPTR 515, to CRI 419 containing CDESC 417 for the destination specified by DADD 405. The technique used is the standard one of employing a hash table to locate a hash chain of CRIs 419 which will include any CRI 419 for DADD 405. The first step is to provide DADD 405 to hash function 507, which produces a hash table entry number 509. Hash table entry number 509 is an index into hash table 511, which is an array of pointers to linked lists of CRIs 419. Any CRI 419 for DADD 405 will be on the linked list of CRIs 419 which is pointed to by hash table entry 513 for hash table entry number 509 produced by hash function 507 from DADD 405. If the CRI 419 for DADD 405 is on the linked list, a CRIPTR 515 to it is returned. CRIs 419 which are added to RI 505 are taken from a free list (not shown) of CRIs 419 and are returned to that free list when they are no longer required in RI 505.

Cache 517 takes advantage of the fact that successive packets 401 often have the same DADD 405. Consequently, it retains the last DADD 405 for which a CRI 419 was located in rate information 505 and a pointer, LCRI 521, for that CRI 419. If the next packet 401 has the same DADD 405, the pointer to CRI 419 for the DADD 405 can be obtained directly from cache 517.

The data structure which implements freame queue status 108 in the preferred embodiment has exactly the same form as shown in FIG. 3. Head 313 in the preferred embodiment points to the first of a linked list of packets 401, while Tail 315 points to the last packet 401 on the linked list.

FIG. 6 is a flowchart 601 showing operation of the prototype preferred embodiment. The first step after start 603 is to initialize the packets 401 (step 605). The initialization sets fields 405 to 413 in packets 401 to simulate a mixture of packet traffic. In one kind of initialization, values obtained using an integer generated from a random number are used to set DADD field 405, QUOTA field 407, and INTERVAL field 409. The next step, 607, initializes the various data structures. All packets 401 are placed on free list 501, all connection rate information structures 419 are placed on the free list for those structures, and the structures of rate information 505, frame queue status 305, and current queue status 123 are initialized so that all queues of connection rate structures 419 and all frame queues 117 are empty and operation begins with frame queue 117(0).

Once initialization is finished, loop 621 begins execution and continues execution as long as desired. As shown by the brackets in Fig. 6, steps 609 through 617 of loop 621 implement queue manager 107, while step 619 implements resource server 121. Beginning with the steps implementing queue manager 107, the first step (609) is to read a packet 401 from free list 501. In a practical embodiment, packet 401 would come from an input queue for packets received by apparatus 101. The next step (611) is to determine the type of service required by the packet 401 from packet 401's RTYPE field 413. If RTYPE field 413 specifies best effort service, packet 401 is placed in best effort queue 115. If RTYPE field 413 specifies rate-controlled service, the next step is to find controlled rate information 419 for the packet 401's DADD 405. First, the DADD 405 is compared with LDADD 519 in cache 517. If they are the same, LCRI 521 contains CRIPTR 515 to CRI 419 for the DADD 405. If they are not the same, the DADD 405 is provided to hash function 507 as described above. If there is a CRI 419 in rate information 505 for the DADD 405, the fields QUOTA 407, INTERVAL 409, and MAX 411 from packet 401 are copied into the corresponding fields 425, 427, and 429 of CRI 419 for DADD 405. This procedure permits different connections to the same destination address to have different controlled rates. If there is no CRI 419 for DADD 405, a CRI 419 is taken from the free list thereof and placed in the proper linked list of CRIs 419. The information from fields 403 through 413 of packet 401 is then copied into the corresponding fields 421, 425 through 429, and 435 of the new CRI 419.

While the information required to determine the rate at which service is to be provided is contained in packets 401 in the prototype, other embodiments may separate this information from the actual packets 401. In such an embodiment, a separate message indicating the rate at which service is to be provided for a connection might precede packets 401 for the connection. In that case, the relevant fields in CRI 419 might be set using the information in the message. Further, queue manager 107 might translate rate information expressed in terms of number of packets 401 over an averaging interval and a jitter averaging interval into the values of QUOTA 425 and INTERVAL 427 required to cause resource server 121 to provide packets 401 at the desired rate.

Once CRI 419 for DADD 405 has been located or made, the next step (617) is to put packet 401 in the proper frame queue 117. The algorithm used to do this is the one previously described with reference to FIGs. 2 and 3. Additionally, CRI 419 keeps track of the number of packets 437 already in frame queues 119 in WAITING field 437. If the number waiting equals the maximum number specified in field 429, packet 401 is not placed on a frame queue 117, but is instead returned to free list 501. In a practical embodiment, apparatus 101 might respond to this situation by sending a message to the source of packet 401 requesting that it slow down transmission of packets 401.

After packet 401 has been put either in best effort queue 115 or the proper frame queue 117, the next step (619) is outputting a packet 401 from the current frame queue 117 or from best effort queue 115, if there is such a packet 401 to be output. If not, there is no output until the frame time for the frame corresponding to current frame queue 117 has expired. The algorithm for outputting a packet 401 is the same as the one previously described. In addition, when a packet 401 for a controlled-rate connection is output, the value in WAITING field 437 for CRI 419 for packet 401's DADD 405 is decremented. In the prototype embodiment, when packet 401 is output, it is returned to free list 501.

As may be seen from flow chart 601, every execution of loop 621 places a packet 401 in either best effort queue 115 or a frame queue 117. However, a packet is output from best effort queue 115 or the current frame queue 117 in an execution of loop 621 only if there is a packet in current frame queue 117 or best effort queue 115. Thus, operation of loop 621 results in the gradual addition of packets 401 to frame queues 117. In the prototype embodiment, there were fifty frame queues 117 and each frame had 100 slots. There were 60 CRIs, permitting rate information 505 for up to 60 connections, and there were 1000 packets 401.

In a practical embodiment, queue manager 107 and resource server 121 would not be parts of a single loop, but would rather be separate entities which shared the memory containing rate information 109, frame queue status 107, and queues 115 and 119. In such an embodiment, queue manager 107 would be a process which received work descriptors 103 and placed them in queues 115 and 119, while resource server 121 would be another process which took work descriptors 103 from queues 119 and 115 and provided them to the multiplexed resources. In some practical embodiments, queue manager 107 and resource server 121 might operate on separate hardware.

### Conclusion

The foregoing Detailed Description has disclosed to one of ordinary skill in the art how to make and use a prototype embodiment of apparatus which multiplexes a resource among entities at a controlled rate. The prototype demonstrates the principles of operation of the apparatus and is the best embodiment presently known to the inventors, but the prototype will necessarily differ in many details from practical embodiments of the invention. Some of these differences have been pointed out. Other such differences may occur in the implementation of frame queues 117. The use of queues in frame queues 117 ensures that work descriptors 103 for a given entity are provided to the multiplexed resource in the same order in which they are received in apparatus 101; however, rate controlled service which did not provide work descriptors 103 in the order in which they were received might be provided with structures other than queues. Further, frame queues 117 in other embodiments might be implemented by means other than linked lists. An example would be a buffer with head and tail pointers. Finally, in other embodiments, different frames might have different frame times. In that case, the averaging interval would be the sum of the frame times and the frame queues associated with the frames might have different maximum lengths.

Other areas where there may be differences in other embodiments include the control of density of work descriptors 103 in the frame queues 117 , the implementation of rate information 109, and the implementation of best effort queues 115. While the use of QUOTA and INTERVAL to control density are particularly simple and effective, any other technique which does so will result in a usable apparatus 101. As regards rate information 109, any technique may be used to implement it which provides a list of rate information which is accessible by entity identifier 105. With the best effort queues, other environments may have more than one best effort queue 115 and resource server 121 may serve the best effort than one best effort queue 115 and resource server 121 may serve the best effort queues in round-robin fashion.

Finally, while the preferred embodiment works with fixed-length packets of data, other embodiments could work with varying-length packets. In such embodiments, the values for QUOTA 203, NO LEFT 209, FSIZE 302, sent so far 303, COUNT 317, and LIMIT 319 would specify numbers of bytes instead of numbers of packets.

The foregoing being the case, the Detailed Description is to be understood as being in all respects illustrative and exemplary but not restrictive, and the scope of the invention is to be determined not from the Detailed Description, but rather from the claims as read in light of the Detailed Description and interpreted in light of the Doctrine of Equivalents.

### Claims

1. Apparatus for time multiplexing a resource for intervals of time among pieces of work provided by one or more entities, the apparatus characterized by:

   one or more sets of work descriptors (117) describing the provided pieces of work;

   a server (121) for providing any work descriptors in the sets thereof from each of the sets thereof to the resource, the work descriptors being provided in an ordered fashion for a set of the intervals of time; and

   means (107) for receiving the work descriptors and placing the work descriptors for pieces of work provided by a given one of the entities in the sets thereof such that the ordered provision of the work descriptors by the server causes the resource to do the pieces of work provided by the given one of the entities at a controlled rate.

2. The apparatus set forth in claim 1 further characterized in that:

   the means for receiving the work descriptors places the work descriptors for the given one of the entities in the sets of work descriptors such that the density of the work descriptors for the given one of the entities in the sets of work descriptors is controlled.

3. The apparatus set forth in claim 2 further characterized in that:

the density is controlled by limiting the number of the work descriptors for the given entity in a given one of the sets of work descriptors and by separating sets of work descriptors which may contain work descriptors for the given entity by a fixed number of sets of work descriptors which may not contain work descriptors for the given entity.

4. The apparatus set forth in claim 1 futher characterized by:

a best effort set of work descriptors (115); and

the server provides any work descriptors from the best effort set to the resource during the set of intervals of time whenever the server is not providing work descriptors from the sets of work descriptors.

5. The apparatus set forth in claim 1 futher characterized in that:

the set of intervals of time is subdivided into subsets thereof; and

the server provides any work descriptors from a given one of the sets of work descriptors during a given one of the subsets of the intervals of time.

6. A method for time multiplexing a resource for intervals of time among pieces of work provided by one or more entities, the method characterized by the steps of:

placing work descriptors describing provided pieces of work for a given one of the entities in one or more sets of work descriptors in a first ordered fashion; and

providing any work descriptors in the sets of work descriptors to the resource in a second ordered fashion during a set of the intervals of time,

the first ordered fashion being such that the provision of the work descriptors in the second ordered fashion to the resource causes the resource to do the pieces of work provided by the given one of the entities at a controlled rate.

7. The method set forth in claim 6 futher characterized in that:

the step of placing work descriptors controls the density of the work descriptors for the given one of the entities in the sets of work descriptors.

8. The method set forth in claim 6 futher characterized in that:

The step of placing work descriptors in the sets of work descriptors includes the steps of

placing no more than a maximum number of work descriptors for the given entity in a given one of the sets of work descriptors and

skipping a fixed number of the sets of work descriptors before again placing work descriptors for the given entity in one of the sets of work descriptors.

9. The method set forth in claim 6 further characterized by the step of:

placing any work descriptors for entities which do not require a controlled rate in a best effort set of work descriptors; and

the step of providing any work descriptors from the sets of work descriptors includes the step of providing any work descriptors from the best effort set of work descriptors whenever the server is not providing work descriptors from sets of work descriptors.

10. The method set forth in claim 6 futher characterized in that:

the step of providing any work descriptors from the sets of work descriptors includes the step of, for each set of work descriptors, providing any work descriptors therein to the resource in a subset of the set of intervals of time.

# FIG. 1

# FIG. 3

| CQ S123 |
| --- |
| FSIZE 302 |
| SENT SO FAR 303 |
| BEF 305 |
| NFQF 306 |
| OFQN 307 |

| FQS 108 |
| --- |
| HEAD 313 |
| TAIL 315 |
| COUNT 317 |
| LIMIT 319 |
| 311 |
| |
| FQSE 311 |

# FIG. 2

| |
| --- |
| QUOTA 203 |
| INTERVAL 205 |
| CFQN 207 |
| NO LEFT 209 |
| 201 |
| |
| ERI 201 |

109

# FIG. 4

| PACKET 401 |
| --- |
| NPKT 403 |
| DADD 405 |
| QUOTA 407 |
| INTERVAL 409 |
| MAX 411 |
| R TYPE 413 |

CDESC 417

| CRI 419 |
| --- |
| DADD 421 |
| NCRI 423 |
| QUOTA 425 |
| INTERVAL 427 |
| MAX 429 |
| CFQN 431 |
| NO LEFT 433 |
| R TYPE 435 |
| WAITING 437 |

# FIG. 5

FLH 503 → 401 ---- 401

FLT 504

501

DADD 405 → HFUNC 507 → HTEN 509 → HT 511 [ HTE 573 ] → 419 ---- 419

CRIPTR 515

RI 505

CACHE 517
LDADD 519
LCRI 521

# FIG. 6

START — 603

INIT PACKETS — 605

INIT STRUCTS — 607

621

READ PACKET — 609

NO ◁ R TYPE = BE? ▷ YES

611

FIND CRI — 613

615 — PUT IN BEQ

PUT IN FQ — 617

OUTPUT TO MR — 619

QM 107

RS 121

601